# EUROPEAN PATENT APPLICATION

(11) **EP 4 750 216 A1**
(43) Date of publication of application: **27.05.2026**
(21) Application number: 24845939.8
(22) Date of filing: 19.07.2024
(51) Int. Cl.: H04W 76/14, H04W 8/00, G06N 20/00, H04W 88/14, H04W 92/10, H04W 92/18

(54) **METHOD FOR APPLICATION OPERATION THROUGH PC5**

(30) Priority: 21.07.2023 US 202363528083 P
(71) Applicant: LG Electronics Inc., Yeongdeungpo-gu Seoul 07336 (KR)
(72) Inventor: KIM, Laeyoung, Seoul 06772 (KR)
(74) Representative: Plasseraud IP
(86) International application number: PCT/KR2024/010426
(87) International publication number: WO 2025/023637

(57) **Abstract**

A disclosure of the present specification provides a method by which an AAnF performs communication. The method comprises the steps of: transmitting, to an NEF, a request for UE selection assistance information for an application operation; on the basis of the request, receiving the UE selection assistance information from the NEF, the UE selection assistance information including a candidate UE list, a UE included in the candidate UE list being capable of performing the application operation through PC5 communication, and a quality of service (QoS) for Uu communication by the UE included in the candidate UE list failing to satisfy a specific criterion; on the basis of the UE selection assistance information, determining a member UE to perform the application operation through the PC5 communication; and transmitting PC5-related information to the member UE, wherein the PC5-related information includes information instructing the member UE to perform the application operation by performing a PC5 connection to a specific UE.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

A method is needed for AF to select/instruct a terminal to perform application operations via PC5.

Furthermore, a method is needed to continue AI/ML operations when the QoS of the Uu communication of a UE performing AI/ML operations is degraded.

### DESCLOSURE

### TECHNICAL SOLUTION

By receiving information based on an AF request from a CN, the AF can perform application operations through PC5 communication for UEs capable of PC5 communication.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a block diagram of a next generation cellular network.
FIG. 5 illustrates an example 5G system structure to which an implementation of the present specification may be applied.
FIG. 6 illustrates a flowchart of the member UE selection and update operations.
FIG. 7 illustrates an example of a registration procedure to which the implementation of this specification applies.
FIG. 8 shows the procedure of the AF according to disclosure of the present specification.
FIG. 9 shows the procedure of the UE according to disclosure of the present specification.
FIG. 10 shows the procedure of the NEF according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

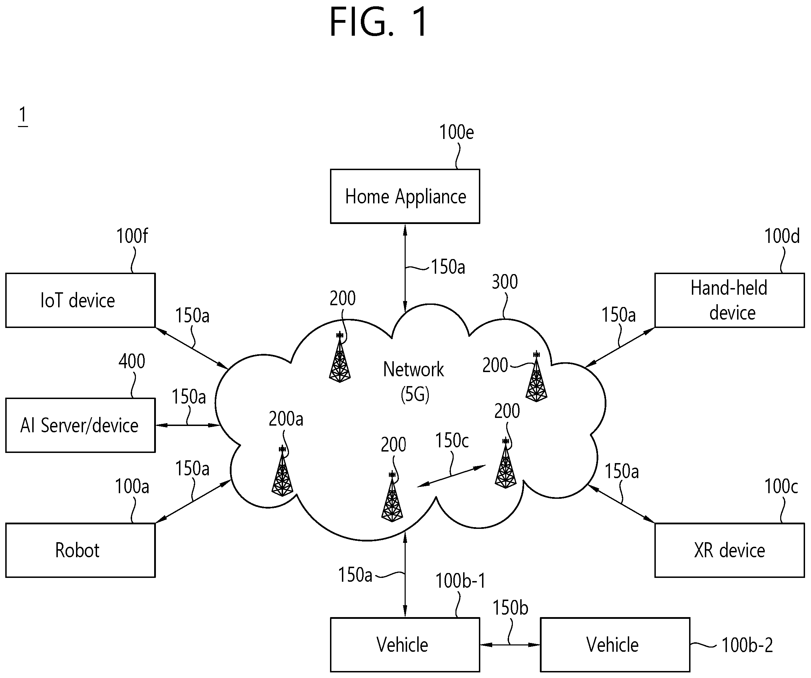

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

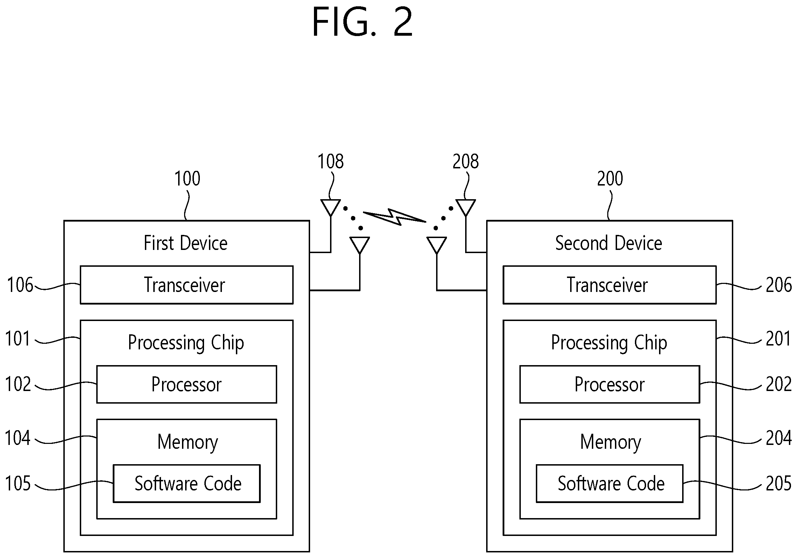

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

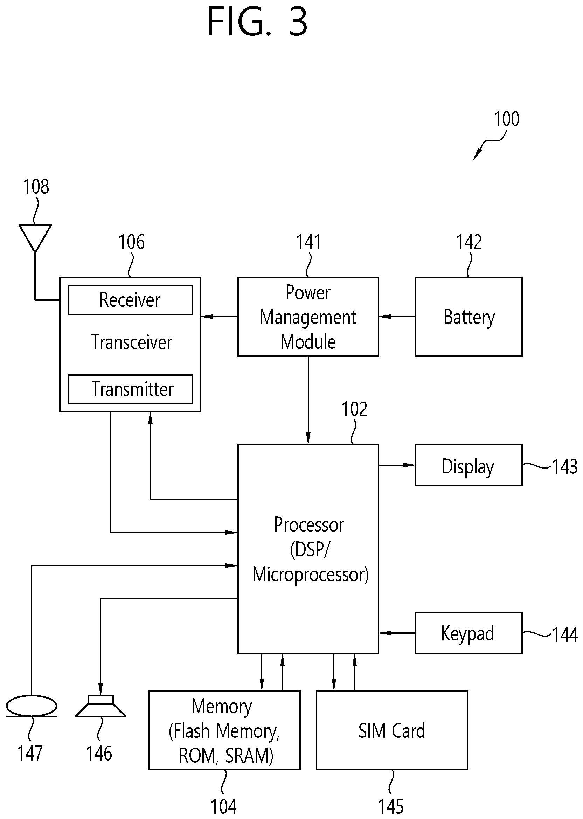

**FIG. 3** **shows an example of UE to which implementations of the present disclosure is applied.**

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

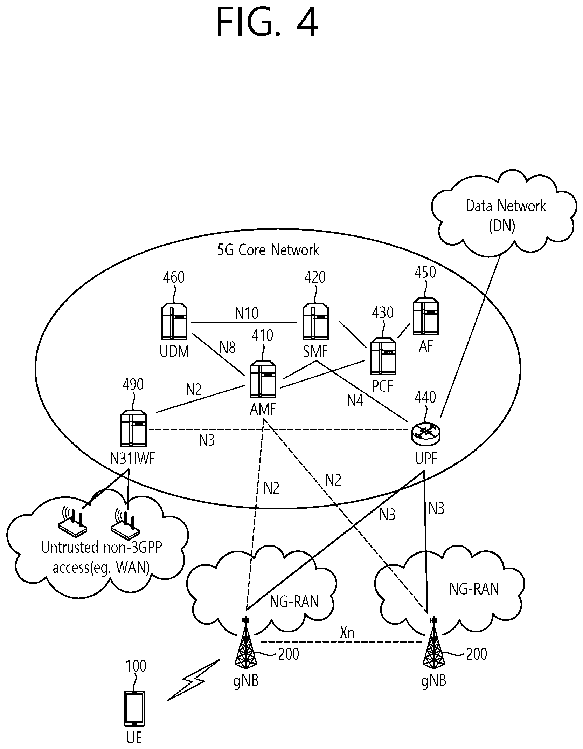

**FIG. 4** **is a block diagram of a next generation cellular network.**

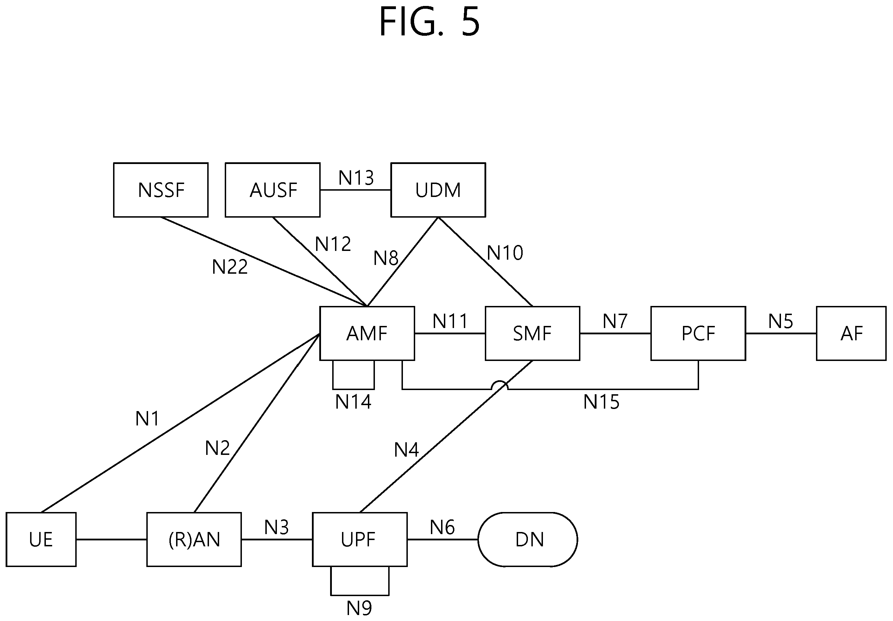

The 5G Core (5GC) may include a variety of components, some of which are shown in FIG. 5, such as the Access and Mobility Management Function (AMF) (410), the Session Management Function (SMF) (420), the Policy Control Function (PCF) (430), the User Plane Function (UPF) (440), the Application Function (AF) (450), the UDF (UDF) (450), and the UDF (UDF) (450): Policy Control Function (PCF) (430), User Plane Function (UPF) (440), Application Function (AF) (450), Unified Data Management (UDM) (460), and Non-3rd Generation Partnership Project (3GPP) Inter Working Function (N3IWF) (490).

The UE 100 is connected to the data network via the UPF 440 through a next generation radio access network (NG-RAN) including the gNB 20.

The UE 100 may also be provided data services via untrusted non-3GPP access, such as a wireless local area network (WLAN). To connect said non-3GPP access to the core network, a N3IWF 490 may be deployed.

The illustrated N3IWF 490 performs the function of managing the interworking between the non-3GPP access and the 5G system. When the UE 100 is associated with a non-3GPP access (e.g., WiFi, also referred to as IEEE 801.11), the UE 100 may be associated with the 5G system via the N3IWF 490. The N3IWF 490 communicates with the AMF 410 for control signaling and with the UPF 440 via the N3 interface for data transfer.

The illustrated AMF 410 may manage access and mobility in a 5G system. The AMF 410 may perform functions to manage Non-Access Stratum (NAS) security. The AMF 410 may perform functions to handle mobility in an idle state.

The UPF 440 shown is a type of gateway through which user data is transmitted and received. The UPF node 440 may perform all or part of the user plane functions of the Serving Gateway (S-GW) and Packet Data Network Gateway (P-GW) of fourth generation mobile communications.

The UPF 440 acts as a demarcation point between the next generation radio access network (NG-RAN) and the core network, and is the element that maintains the data path between the gNB 20 and the SMF 420. Additionally, the UPF 440 acts as a mobility anchor point when the UE 100 moves across the area served by the gNB 20. The UPF 440 may perform functions to handle PDUs. For mobility within the NG-RAN (Next Generation-Radio Access Network as defined in 3GPP Release-15 and later), the UPF may route packets. The UPF 440 may also function as an anchor point for mobility with other 3GPP networks (RANs defined prior to 3GPP Release-15, e.g., UTRAN, E-UTRAN (Evolved-UMTS (Universal Mobile Telecommunications System) Terrestrial Radio Access Network), or GERAN (Global System for Mobile Communication (GSM)/EDGE (Enhanced Data rates for Global Evolution) Radio Access Network). The UPF 440 may correspond to a termination point of the data interface to the data network.

The PCF 430 shown is a node that controls the operator's policies.

The AF 450 shown is a server for providing multiple services to the UE 100.

The UDM 460 shown is a type of server that manages subscriber information, such as a home subscriber server (HSS) in fourth generation mobile communications. The UDM 460 stores and manages subscriber information in a unified data repository (UDR).

The SMF 420 shown may perform the function of assigning an Internet Protocol (IP) address of a UE. The SMF 420 may also control protocol data unit (PDU) sessions.

As a point of reference, the drawing symbols for AMF 410, SMF 420, PCF 430, UPF 440, AF 450, UDM 460, N3IWF 490, gNB 20, or UE 100 may be omitted herein.

Fifth generation mobile communications supports multiple numerologies or subcarrier spacings (SCS) to support various 5G services. For example, an SCS of 15 kHz supports wide area coverage in traditional cellular bands; an SCS of 30 kHz/60 kHz supports dense-urban, lower latency, and wider carrier bandwidth; and an SCS of 60 kHz or higher supports bandwidths greater than 24.25 GHz to overcome phase noise.

**FIG. 5** **illustrates an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### < Operation for Artificial Intelligence and Machine Learning >

To support candidate UE selection, the AF provides a list of target UEs and one or more Member UE filtering criteria as part of its service operation parameters. Upon receiving an AF request, the NEF triggers the corresponding 5GC procedure to retrieve information about the UEs in the target UE list from the 5GC NF. Before transmitting the candidate UE list to the AF, the NEF integrates all information collected from other 5GC NFs to derive additional information based on one or more candidate UE lists and the Member UE filtering criteria requested by the AF.

### 1. Member UE Selection

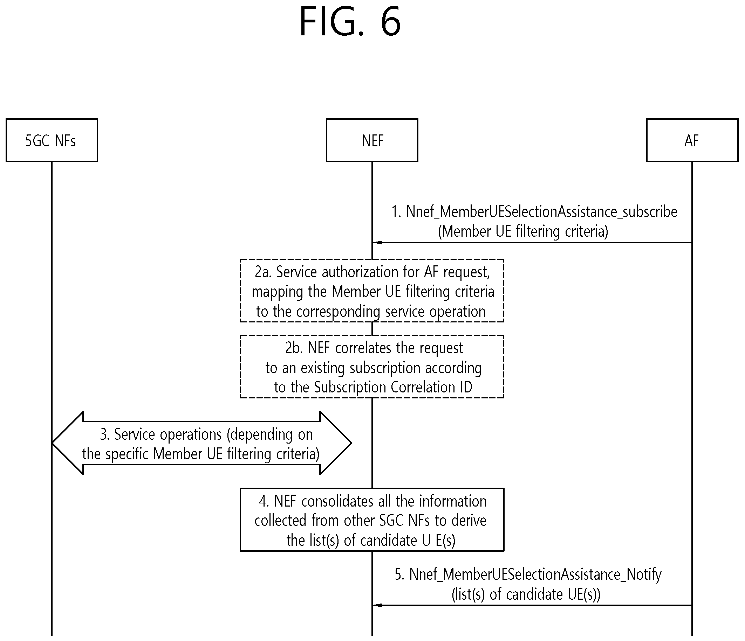

**FIG. 6** **illustrates a flowchart of the member UE selection and update operations.**

Step 1. AF subscribes the Member UE selection assistance functionality by sending Nnef_MemberUESelectionAssistance _subscribe request including a list of target UE(s), one or more UE member filtering criteria listed in the Table 3 and optionally, time window(s). Subsequently, the AF may update the filtering criteria of the subscription by invoking Nnef_UEMemberSelectionAssistance _subscribe and providing a Subscription Correlation ID.

Step 2a. [OPTIONAL] NEF verifies the authorization of the AF Request and identifies which information needs to be collected for each UE in the list of target UE(s) and executes the corresponding service operation based on the Member UE filtering criteria provided by the AF, e.g. events, analytics and/or notifications.

Step 2b. [OPTIONAL] The NEF correlates the Nnef_MemberUESelectionAssistance_Subscribe request to an existing subscription according to the Subscription Correlation ID. The NEF uses the target UEs received in step 1 for the Member UE update using the updated filtering criteria.

Step 3. NEF interacts with different 5GC network functions to collect the required information for each UE in the list of target UE(s). The set of interactions between NEF and among 5GC NFs are dependent on the Member UE filtering criteria provided by the AF.

Step 4. Based on the collected information from other 5GC NFs, NEF consolidates all the information collected from other 5GC NFs to derive the list(s) of candidate UE(s) which fulfil the Member UE filtering criteria in the AF request. The NEF may derive recommended time window(s) considering the validity period(s) of the analytics used for Member UE selection criteria, which are a subset of the time window(s) received from the AF.

Step 5. NEF sends a Nnef_MemberUESelectionAssistance _Notify request to the AF including the list(s) of candidate UE(s) and possibly additional information.

### 2. Member UE Filtering Criteria

Table 3 provides a summary of the Member UE filtering criteria that the AF may request.

**[Table 3]**

| **Member UE filtering criteria** | **Description of filtering criterion** | **UE filtering information** | **Detailed description clause** |
|---|---|---|---|
| QoS | The Quality of Service of the selected UEs match or exceed the QoS of the filtering criteria | Service operation: Nsmf_EventExposure or Nudm _EvenExposure, | 4.15.13.3 in TS 23.502 v18.2.0 |
| | | Filter: target=SUPI, Event=QoS Monitoring, traffic descriptor (e.g. Application ID) | |
| Access Type and/or RAT Type of the PDU Session | Indicate the Access Type and/or RAT Type of the selected UE for the PDU Session used by the application (e.g. 3GPP/NR, Non-3GPP/WLAN, additional Access Type and RAT Type for MA PDU session) | Service operation: Nsmf_EventExposure | This can be provided by existing service operations, events and procedures. |
| | | Filter: a list of GPSI(s) or SUPI(s), DNN/S-NSSAI | |
| | | Event ID: Change of Access Type and/or Change of RAT Type | |
| End-to-end data volume transfer time | Indicate the end-to-end data volume transfer time that refers to a time for completing the transmission of a specific data volume between UE to AF, e.g. the average and variance of End-to-end data volume transfer time | Service operation: Nnwdaf_AnalyticsSubscription/ Nnwdaf_AnalyticsInfo | 4.15.13.6 in TS 23.502 v18.2.0 |
| | | Filter: Analytics ID = End-to-end data volume transfer time, target = GPSI(s) or SUPI(s) | |
| UE current location | Indicate the certain area that the selected UE currently located in. | Service operation: Namf_EventExposure | 4.15.13.4 in TS 23.502 v18.2.0 |
| | | Filter: a list of GPSI(s) or SUPI(s) | |
| UE historical location | Indicate the certain area that the selected UE appeared in a historical period of time | Service operation: Nnwdaf_Analytic s Subscription | 4.15.13.4 in TS 23.502 v18.2.0 |
| | | Filter: Analytics ID = UE mobility, Filters include "Visited AoI = Target AOI" and "target period = historical nomadic period | |
| UE direction | Indicate the selected UEs should include different moving direction | Service operation: Nnwdaf_AnalyticsSubscription | 4.15.13.4 in TS 23.502 v18.2.0 |
| | | Filter: Analytics ID= UE Mobility, Direction | |
| UE separation distance (NOTE 1) | Indicate the selected UEs should comply with a minimum separation distance between each other | Service operation: Nnwdaf_AnalyticsSubscription/ Nnwdaf_AnalyticsInfo | 4.15.13.4 in TS 23.502 v18.2.0 |
| | | Filter: Analytics ID = Relative Proximity | |
| | | Filters include "Proximity Attributes" | |
| Service Experience | Indicates selected UEs fulfilling ceratin Service Experience criteria e.g., MOS value | Service operation: Nnwdaf_AnalyticsInfo_ Request/Subscribe Analytics ID=Service Experience | 4.15.13.5 in TS 23.502 v18.2.0 |
| | | Filter: S-NSSAI, DNN, Application ID, DNAI, AoI, Service Experience Contribution weight reporting threshold (NOTE 2), Service Experience Type (NOTE 3) | |
| DNN | Indicate the DNN of the selected UE for the PDU Session used by the application | Service operation: Nsmf_EventExposure | 5.2.8.3 in TS 23.502 v18.2.0 |
| | | Filter: a list of GPSI(s) or SUPI(s) | |
| | | Event ID: QFI allocation | |
| NOTE 1: This criterion should only be applied when the number of UEs is in the range of 10's or less. | | | |
| NOTE 2: The Service Experience Contribution Weights signal the relative importance of each UE's Service Experience value (i.e. MOS), as defined in TS 23.288 v18.2.0. For example, it might be that the service experience of a UE in relation to other UEs may not be as important e.g. because the data provided by such UE is not as critical to the service. | | | |
| NOTE 3: Indicates the type of service experience analytics, e.g. AIML traffic where a customized MoS apply. | | | |

If a terminal's direct network connection does not meet the QoS requirements while participating in a federated learning (FL) operation (AI/ML operation), the terminal may establish a direct device connection with another UE to continue the FL operation (AI/ML operation). A specific solution is needed in this regard.

In this specification, the terms application operation, AI/ML operation, and FL operation are described interchangeably. For example an application operation may be an AI operation, an ML operation, or an FL operation.

The AI/ML operation support method considering PC5 communication proposed in this specification may be configured by a combination of one or more of the operations/configurations/steps described below.

In this specification, the terms UE (User Equipment) and terminal are described interchangeably.

In this specification, the terms subscriber and user are described interchangeably.

In this specification, the terms Application Function (AF) and Application Server (AS) are described interchangeably.

In this specification, AI/ML (related/based) operations are interchangeably described as AI/ML (related/based) services, AI/ML (related/based) applications, application AI/ML, application-layer AI/ML, application-layer AI/ML (related/based) operations, and AI/ML (related/based) tasks.

In this specification, the terms "service" and "application" are interpreted interchangeably unless otherwise specified.

AI/ML operations may include the following operations, and the AI/ML operation support method considering PC5 communication proposed in this specification may be applied to the following operations:
- AI/ML operation splitting between AI/ML endpoints;
- AI/ML model/data distribution and sharing over 5G system;
- Distributed/Federated Learning over 5G system.

In this specification, "direct device connection" is interchangeably described with terms such as PCS/Sidelink/ProSe, PCS/Sidelink/ProSe operation, PC5/Sidelink/ProSe service, Device-to-Device connection, UE-to-UE connection, ProSe/PC5/Sidelink connection, PCS/Sidelink/ProSe communication, and direct device communication.

PC5/Sidelink/ProSe operation may be understood to include some or all of the operations/procedures related to 5G ProSe Direct Discovery, 5G ProSe Direct Communication, 5G ProSe UE-to-Network Relay, and 5G ProSe UE-to-UE Relay.

In this specification, "AI/ML operation using direct device connection" is interchangeably described with terms such as decentralized AI/ML operation and decentralized averaging method.

Decentralized AI/ML operations may be AI/ML operations performed via direct device connection (PC5).

In this specification, direct device connection may mean/include/use one or more of the following cast modes/types:
- Unicast (or PC5 unicast link or Layer-2 link)
- Groupcast
- Broadcast

In this specification, PC5 is used interchangeably with sidelink and ProSe.

In this specification, direct network connection is used interchangeably with Uu connection, Uu communication, connection via network, communication via network, and direct network communication.

In this specification, AI/ML operations using direct network connection are used interchangeably with centralized AI/ML operations and centralized averaging methods.

In this specification, a UE with PC5 capability may also be interpreted as a 5G ProSe-enabled UE.

This specification primarily describes the proposed content. For operations and procedures related to the interaction (etc.) between the core network, the 5G system, and AF, reference will be made primarily to TS 23.501 v18.2.2, TS 23.502 v18.2.0, and TS 23.503 v18.2.0. For operations and procedures related to ProSe/PC5/Sidelink, reference will be made primarily to TS 23.304 v18.2.0.

### I. First Embodiment

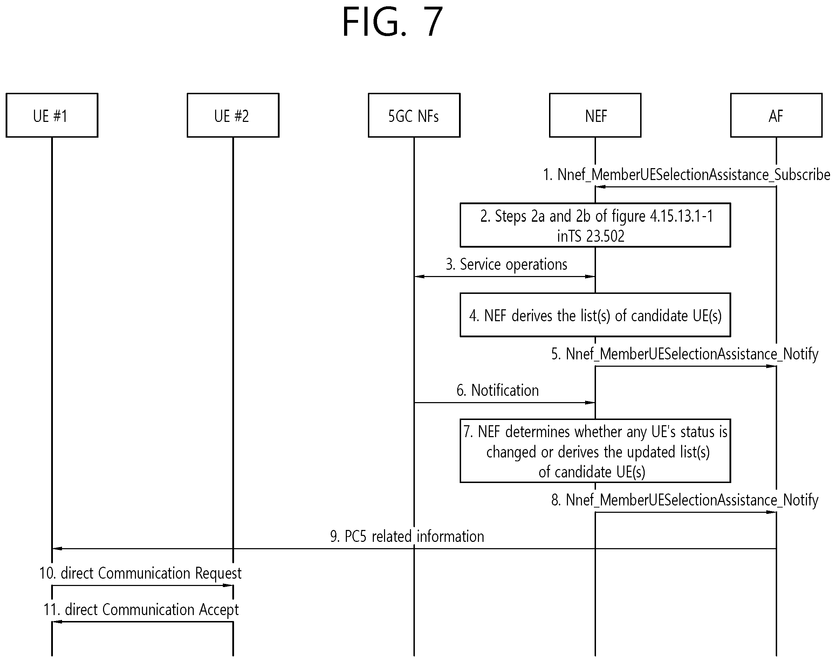

**FIG. 7** **illustrates an example of a registration procedure to which the implementation of this specification applies.**

Regarding FIG. 7, the proposed content of this specification is mainly described based on Section 5.46 (Assistance to AI/ML Operations in the Application Layer) of TS 23.501 v18.2.2 and Section 4.15.13 (Assistance for Member UE selection) of TS 23.502 v18.2.0.

Step 1. The AF may perform Nnef_MemberUESelectionAssistance _MemberUESelectionAssistance_Subscribe (e.g., subscribe to the Member UE Selection Assistance Information/Notification Service) with the NEF. The AF may send the NEF a Member UE Selection Assistance Subscription (Nnef_MemberUESelectionAssistance _MemberUESelectionAssistance_Subscribe). The AF may send the NEF a subscription request for the Member UE Selection Assistance. An AF may request, to the NEF, for information about Member UE Selection Assistance via Nnef_MemberUESelectionAssistance Subscribe. Information about Member UE Selection Assistance may be for application operations (AI/ML operations).

The Member UE Selection Assistance Subscription (Nnef_MemberUESelectionAssistance_Subscribe) may include one or more of the following additional information:

When an AF initially subscribes to the Member UE Selection Assistance Information/Notification service with an NEF, the AF may include one or more of the following additional information in the Member UE Selection Assistance Subscription (Nnef_MemberUESelectionAssistance_Subscribe).

Furthermore, when an AF updates an existing subscription, the AF may also include one or more of the following additional information in the Member UE Selection Assistance Subscription (Nnef_MemberUESelectionAssistance_Subscribe).

The information below may be expressed explicitly, implicitly, in combination, implied, or in a cascaded form.

1) Information requesting the provision of ProSe Service Authorization information (or ProSe subscriber information) for UE(s) included in a list of target UE(s) or a list(s) of candidate UE(s).

The ProSe Service Authorization information may refer to subscriber information (ProSe Subscription data). Alternatively, the ProSe Service Authorization information may refer to information regarding ProSe Direct Communication (e.g., information regarding whether the UE is authorized to use ProSe Direct Communication) among the subscriber information. Alternatively, the ProSe Service Authorization information may refer to information regarding ProSe UE-to-Network Relay (e.g., whether the UE is authorized to use or serve as a ProSe UE-to-Network Relay) among the subscriber information. Alternatively, the ProSe service authorization information may be subscriber information for a newly defined AI/ML operation (application operation) related direct device connection (or subscriber information for an Application Layer UE-to-Network Relay).

For the subscriber information, refer to Table 5.2.3.3.1-1: UE Subscription data types in TS 23.502 v18.2.0.

The ProSe service authorization information may be provided to the AF only if authorized, or may be provided to the AF in both authorized and unauthorized cases.

2) Information requesting the provision of "5G ProSe authorized" information for UE(s) included in a list of target UE(s) or a list(s) of candidate UE(s).

The "5G ProSe authorized" information may refer to the "5G ProSe authorized" information provided by the AMF to the NG-RAN. The above information may refer to information about ProSe Direct Communication (e.g., whether the UE is authorized to use 5G ProSe Direct Communication), or may refer to information about ProSe UE-to-Network Relay (e.g., one or more of whether the UE is authorized to act as a 5G ProSe Layer-2 UE-to-Network Relay, whether the UE is authorized to act as a 5G ProSe Layer-3 UE-to-Network Relay, and whether the UE is authorized to act as a 5G ProSe Layer-2 Remote UE). Alternatively, the "5G ProSe authorized" information may refer to authorized information about a newly defined direct device connection related to AI/ML operations (or authorized information about an Application Layer UE-to-Network Relay).

For the "5G ProSe authorized" information, refer to Section 6.6 (Procedures for Service Authorization to NG-RAN) of TS 23.304 v18.2.0.

The "5G ProSe authorized" information may be provided to the AF only if authorized, or may be provided to the AF in both authorized and unauthorized cases.

3) Information requesting the provision of an Application Layer ID (ALA) for UE(s) included in a list of target UE(s) or a list of candidate UE(s).

The Application Layer ID may be identification information used for PC5 operations.

Application Layer ID: An identifier identifying a 5G ProSe-enabled UE within the context of a specific application.

The Application Layer ID may be stored in a 5GC NF, such as a UDM, UDR, PCF, NEF, or 5G DDNMF (5G Direct Discovery Name Management Function).

The above application layer ID may be UE-specific, subscriber-specific, ProSe service-specific (e.g., ProSe identifier-specific), application-specific (i.e., Application ID-specific), or AF identifier-specific. For example, the application layer ID may be set/stored/provided at various granularities.

4) Information indicating the presence of ProSe Service Authorization information (or that ProSe Service Authorization information has been approved) as part of the member UE filtering criteria.

Regarding the ProSe Service Authorization information, reference may be made to the information described in 1) above.

5) Information indicating the presence of "5G ProSe authorized" information (or that "5G ProSe authorized" information has been approved) as part of the member UE filtering criteria.

Regarding the "5G ProSe authorized" information, reference may be made to the information described in 2) above.

6) Information requesting that, when a change occurs in the previously provided/notified candidate UE list (or the UEs included therein) (e.g., due to a change in whether a member UE filtering criterion is satisfied, or due to a change in ProSe service authorization information), instead of providing updated list(s) of candidate UE(s), Information requesting information on which UE in the list(s) of candidate UE(s) already provided/notified have changed its satisfaction of which filtering criteria.

The request may be for a specific filtering criterion only. This may be for one or more specific filtering criteria. For example, the filtering criterion may be "QoS." The filtering criterion may be "End-to-end data volume transfer time." The filtering criterion may be "Service Experience" (etc.).

The above specific filtering criteria may be interpreted as being related to direct network connection/Uu-related QoS or direct network/Uu-related transmission conditions.

If only specific filtering criteria are requested, and the satisfaction of other filtering criteria changes, the NEF may determine/produce an updated list(s) of candidate UE(s) based on this and provide/notify the AF of the updated list(s) of candidate UE(s).

7) Information requesting the provision (notification) of information regarding the satisfaction (information) of filtering criteria and/or changes (information) regarding filtering criteria when providing (notifying) the list(s) of candidate UE(s).

The above candidate UE list (list(s) of candidate UE(s)) may correspond only to the updated candidate UE list (updated list(s) of candidate UE(s)). Alternatively, the candidate UE list (list(s) of candidate UE(s)) may correspond to both the updated candidate UE list (updated list(s) of candidate UE(s)) and the initial candidate UE list (initial list(s) of candidate UE(s)).

8) Information requesting provision (notification) of UE(s) that were included in the previously provided (notified) candidate UE list (list(s) of candidate UE(s)) but excluded (omitted) from the updated candidate UE list and the reason for their exclusion (omission) when providing (notifying) the updated candidate UE list (updated list(s) of candidate UE(s)). It may request information on what filtering criteria have changed regarding the aforementioned UE(s).

9) Information requesting location information for UEs included in a list of target UE(s) or a list of candidate UE(s).

The location information may be provided to the AF in various forms (e.g., coordinate information, address information, cell information, tracking area information, etc.).

10) Information requesting that a UE included in the previously provided/notified list(s) of candidate UE(s) not be excluded from the list(s) of candidate UE(s) (or be retained) if it fails to satisfy the Uu QoS, provided that PC5 operation is possible (permitted).

11) Information requesting that UEs included in a list(s) of candidate UE(s) that do not satisfy the Uu QoS be included in the list(s) of candidate UE(s) if PC5 operation is possible/allowed.

For example, UEs that are unable to perform Uu communication (do not satisfy QoS) but capable of PC5 communication may be included in the candidate UE list (candidate UE list to be transmitted to the AF).

In this specification, the candidate UE list (list(s) of candidate UE(s)) is described interchangeably with the recommended UE list (list(s) of recommended UE(s)).

In this specification, the member UE filtering criteria is described interchangeably with the filtering criteria.

The above 1) to 3) may be interpreted as requesting the provision of information related to PC5 capability/permission.

The AF may transmit a target UE list to the NEF, allowing the NEF to collect information about the UEs included in the list.

The above 4) to 5) may be interpreted as requesting the NEF to select only UEs capable of/permitted PC5 operation when selecting candidate UEs (or to include only UEs capable of/permitted PC5 operation in the candidate UE list).

Step 2. The actions corresponding to steps 2a and 2b of section 4.15.13.1 of TS 23.502 v18.2.0 may be performed.

Step 3. The action corresponding to step 3 of section 4.15.13.1 of TS 23.502 v18.2.0 may be performed.

Based on the information provided by the AF, the NEF may perform additional actions in addition to step 3 of section 4.15.13.1 of TS 23.502 v18.2.0.

For example, to obtain 1) and 3) of step 1 above, the NEF may interact with the UDM.

For example, to obtain 2) of step 1 above, the NEF may interact with the AMF.

For example, to obtain 3) of step 1, the NEF may interact with the UDR.

Regarding 1), 2), and 3) of step 1, the NF exposing the information may also provide (or notify) the information to other NFs (e.g., NEF, AF, etc.) using newly defined events. This can be applied throughout this specification.

For example, the NEF may receive information about multiple UEs from other NFs.

For example, the NEF may receive information about UEs included in the target UE list received in step 1 from other NFs.

The NEF may receive PC5 QoS-related information (or events) from NG-RAN, OAM, 5GC, etc. Using the received PC5 QoS-related information (or events), the NEF may provide (or notify) member UE selection assistance information to the AF.

Step 4. The operation corresponding to Step 4 of Section 4.15.13.1 of TS 23.502 v18.2.0 may be performed.

To utilize information collected from other 5GC NF(s) and its own information, the NEF may consolidate the information collected from other 5GC NF(s) and its own information. Based on the consolidated information, the NEF may determine (or produce) a candidate UE list.

The target UE list received by the NEF in Step 1 may include the determined candidate UE list. For example, the NEF may determine a candidate UE list that includes at least one UE included in the target UE list received in Step 1. The determined candidate UE list may be a subset of the target UE list received by the NEF in Step 1.

The candidate UE list may include UEs that have already performed Uu communication but do not satisfy the Uu QoS.

The UEs included in the candidate UE list may include UEs that do not perform Uu communication and do not satisfy Uu QoS.

Step 5. The NEF may provide (or notify) the AF with a candidate UE list. At this time, based on the AF's request (etc.), the NEF may also provide (or notify) the AF with various information.

The NEF may transmit member UE selection assistance information to the AF. The member UE selection assistance information may include the candidate UE list and various information. The various information may include PC5 QoS-related information (or events) collected from NG-RAN, OAM, 5GC (etc.) in step 3.

The AF may select (or determine) the UE(s) (e.g., UE#1 and UE#2) to participate in (or use) the AI/ML operation (application operation) based on the member UE selection assistance information provided by the NEF.

The AF may enable selected UEs (e.g., UE#1 and UE#2) to perform AI/ML operations (e.g., FL tasks).

Once the AF selects (determines) the UEs to participate in (use) the AI/ML operation (application operation), it may configure list of target UE(s) including the selected UE(s).

The AF may newly subscribe to the Member UE Selection Assistance Information/Notification service with the NEF. The AF may include the newly configured target UE list in the subscription message. The newly configured target UE list may include the UEs selected to participate in the AI/ML operation.

Alternatively, the AF may update the subscription performed in step 1 with the NEF.

The aforementioned subscription update (or new subscription) by the AF may be intended to receive updated information (e.g., changes in QoS conditions for Uu communications) regarding the UEs selected by the AF to participate in the AI/ML operation.

The aforementioned AF subscription update (or new subscription) may be performed in step 1. Alternatively, the aforementioned AF subscription update (or new subscription) may be performed after step 5. Alternatively, the aforementioned AF subscription update (or new subscription) may be performed after step 8.

Based on the aforementioned AF subscription update (or new subscription), one of the following actions may be performed:
- If the information provided to the AF in step 5 or step 8 includes information indicating that a UE performing AI/ML operations cannot satisfy the QoS for Uu communication, the AF may switch from the currently performing Uu communication-based AI/ML operation to the PC5 communication-based AI/ML operation.
- If the information provided to the AF in step 5 or step 8 includes information that a UE performing AI/ML operations cannot satisfy the QoS for Uu communication and that the UE cannot perform AI/ML operations based on PC5 communication, the AF may perform actions such as excluding the UE from member UEs so that the UE no longer performs AI/ML operations.

The above actions may be performed after step 1, step 5, or step 8.

Step 6. NEF may be notified by other 5GC NF(s) with which NEF performed service subscription or interaction in step 3 that certain information has changed or that an event has occurred.

For example, in step 3, as described in section 4.15.13.3.3 (Member UE Assistance with QoS filtering criteria for real-time QoS Monitoring) of TS 23.502 v18.2.0, the NEF may subscribe to the SMF for QoS monitoring events. Based on this, the NEF may be notified of QoS monitoring-related information from the UPF.

Step 7. The NEF may determine which UE's status changes based on the information received in step 6. Alternatively, the NEF may determine an updated list of candidate UE(s).

For example, a UE may once satisfy a filtering criterion but no longer do. For example, a UE may once be a candidate UE but no longer be. For example, a UE may once have been included in the candidate UE list but no longer can be.

For example, a UE may once have failed to satisfy a filtering criterion but now does. For example, a UE may once have failed to be a candidate UE but now is. For example, a UE may once have failed to be included in the candidate UE list but now is.

In this way, when the status of a UE changes, the NEF may determine an updated candidate UE list.

The NEF may determine that it needs to provide the AF with an updated candidate UE list. Based on this, the NEF may determine an updated candidate UE list.

Step 8. Based on the AF's request, the NEF may provide the AF with updated (changed) member UE selection assistance information.

The updated member UE selection assistance information may include the updated candidate UE list determined by the NEF in step 7.

The NEF may provide (notify) the AF with information regarding which filtering criteria have changed for which UEs in the previously provided (notified) candidate UE list (e.g., the candidate UE list provided in step 5). This action may be based on that the AF includes 6) in the member UE selection assistance subscription (Nnef_MemberUESelectionAssistance_Subscribe) in step 1.

The NEF may provide (notify) the AF with information regarding which UEs have been excluded (omitted) from the previously provided (notified) candidate UE list (e.g., the candidate UE list provided in step 5) and the reasons for their exclusion (omission). At this time, the NEF may also inform the AF of which filtering criteria have changed for the excluded UEs. This action may be based on the AF including 8) in the Member UE Selection Assistance Subscription (Nnef_MemberUESelectionAssistance_Subscribe) in step 1.

The AF may determine (recognize) one or more of the following based on the information provided by the NEF:
a) Some UE(s) cannot satisfy the QoS or transmission conditions associated with the direct network connection/Uu for performing AI/ML operations (application operations).
b) Some UE(s) are not desirable or able to use the direct network connection/Uu for performing AI/ML operations (application operations).
c) Some UE(s) must switch to direct device connection/PC5 (or can or must use direct device connection/PC5) to perform AI/ML operations (application operations): This may be interpreted as recognizing (determining) that the some UE(s) can continue to participate in (use) AI/ML operations.
d) Decentralized AI/ML operations (application operations) are required or must be performed.
e) A UE that must switch to direct device connection/PC5 to perform AI/ML operations (application operations) (e.g., a UE corresponding to a) to b) above) and candidate UE(s) that can (or are capable of) performing direct device connection/PC5 communication with this UE.

The candidate UE(s) may be UE(s) determined to be located at a location (distance) where PC5 operations are possible with the UE that must switch to direct device connection/PC5. For example, the AF may determine the candidate UE(s) based on the location information of the UEs.

The AF may also determine the location information of the UEs based on the LCS method/mechanism (see TS 23.273 v18.2.0). The AF may also obtain the location information of the UEs from the UEs through an application layer message. This can be applied throughout this specification.

If there are multiple UEs that must switch to direct device connection/PC5 for AI/ML operations, the candidate UE(s) may be candidate UE(s) capable of performing (or possibly performing) direct device connection/PC5 communication for each UE.

f) UE(s) that will perform (or participate in) decentralized AI/ML operations (application operations).

The UE(s) that will perform the decentralized AI/ML operations may include at least the UE(s) corresponding to a) to c).

The UE(s) to perform the distributed AI/ML operation may include candidate UE(s) that do not correspond to a) to c) above, but are capable (or possible) of performing direct device connection/PC5 communication with a UE corresponding to a) to c).

If there is one UE corresponding to a) to c), the UE(s) to perform the distributed AI/ML operation may include candidate UE(s) that do not correspond to a) to c), but are capable (or possible) of performing direct device connection/PC5 communication with a UE corresponding to a) to c).

If there are multiple UEs corresponding to a) to c) above and direct device connection/PC5 communication can be performed between the multiple UEs, the UE(s) to perform the distributed AI/ML operation may not include the candidate UE(s) (candidate UE(s) that do not correspond to a) to c), but are capable (or possible) of performing direct device connection/PC5 communication with a UE corresponding to a) to c)).

The AF may determine whether direct device connection/PC5 communication can be performed between UEs based on their location information.

g) A UE that acts as a server when decentralized AI/ML operations (application operations) are performed.

The UE that acts as a server can perform one or more of the following actions:
- Receive training results from other UEs via PC5 and aggregate them.
- Send updates of the training model for the next round to other UEs via PC5.
- Send training results to the AF/AS.

The UE that acts as a server may perform various roles, including a leader role, an aggregator role, a network connection/relay role, and a leading UE role.

h) Cast mode/type to be used for decentralized AI/ML operations (application operations): This may be unicast or groupcast

i) Some UE(s) are unable to switch to direct device connection/PC5 (or cannot use direct device connection/PC5) to perform AI/ML operations (application operations): This may be interpreted as the UE(s) recognizing/determining that they cannot continue to participate in/use AI/ML operations.

j) Member UE(s) to participate (use) in the AI/ML operation/task: These UE(s) may be UEs included in the initial list of member UEs. These UE(s) may also be UEs included in the updated list of member UEs. For example, if the AI/ML operation/task is FL, these UE(s) may be UE(s) that will participate in the FL of the next round.

If the AF recognizes (determines) the above e), the UEs corresponding to the above e) may be UE#1 and UE#2. For example, UE#1 may be a UE that must switch (transition) to direct device connection/PC5 to perform the AI/ML operation, and UE#2 may be a candidate UE that can (or is capable of) performing direct device connection/PC5 communication with this UE (UE#1).

When the AF recognizes (determines) the above f), the UEs corresponding to the above f) may be UE#1 and UE#2. For example, UE#1 and UE#2 may be UEs that perform (or participate in) decentralized AI/ML operations.

Any UE and any candidate UE(s) capable of (or possibly) performing direct device connection/PC5 communication with the any UE may all be UEs participating in (using) the (same) AI/ML operation. Alternatively, any UE and any candidate UE(s) capable of (or possibly) performing direct device connection/PC5 communication with the any UE may be UEs that are not participating in (using) the AI/ML operation.

The UE(s) that perform (or participate in) the decentralized AI/ML operation may all be UEs participating in (using) the (same) AI/ML operation. Alternatively, the UE(s) that will perform (or participate in) the decentralized AI/ML operation may be UEs that are not participating (using) the AI/ML operation.

The AF may determine the UE(s) that will perform the AI/ML operation based on information provided by the NEF.

Before performing the procedure of FIG. 7, or in parallel with the procedure of FIG. 7, or after receiving the message of step 5, the AF may perform a procedure to receive specific information (events) for specific UEs (UE(s) included in the target UE list, UE(s) included in the candidate UE list, or UE(s) determined to be used for the AI/ML operation).

The above specific information (event) may be Uu QoS-related information (event) (e.g., Uu QoS performance-related information (event), Uu QoS satisfaction-related information (event), Uu resource allocation-related information (event), Uu QoS monitoring information (event), congestion-related information (event), etc.), PC5 QoS-related information (event) (e.g., PC5 QoS performance-related information (event), PC5 QoS satisfaction-related information (event), PC5 resource allocation-related information (event), PC5 QoS monitoring information (event), PC5 congestion-related information (event), etc.), location-related information (event), etc.

For this purpose, various conventional procedures and/or newly defined procedures may be used.

For example, various conventional procedures include those requesting analytics information to NWDAF (see TS 23.288 v18.2.0), and various information (event) provisioning (exposure) procedures defined in Section 4.15.6 (External Parameter Provisioning) of TS 23.502 v18.2.0 (e.g., Section 4.15.6.13 (Multi-member AF session with required QoS), Section 4.15.6.6 (Setting up an AF session with required QoS procedure), Section 4.15.6.6a (AF session with required QoS update procedure), etc.).

The AF may recognize (determine) a) to j) for a UE based on these operations/procedures.

The AF may also obtain various information (e.g., the UE's PC5 capability, UE location information, Uu QoS-related information, PC5 QoS-related information, etc.) from the UE to recognize (determine) a) to j).

The AF may also recognize/determine a) to j) by initially receiving a list(s) of candidate UE(s) from the NEF. In this case, UEs that have difficulty performing AI/ML operations/tasks via Uu may be understood to perform AI/ML operations/tasks via PC5 from the beginning.

Step 9. The AF may provide PC5-related information to UE#1 (the UE determined by the AF to perform AI/ML operations). The PC5-related information may include one or more of the following. The information below may be expressed explicitly, implicitly, in combination, implicitly, or in a step-by-step manner. The PC5-related information may also be considered a ProSe policy (or parameter).
I) Information instructing (requesting) to use direct device connection/PC5 for AI/ML operations, switching to direct device connection/PC5, or performing decentralized AI/ML operations.
II) AI/ML operation/task identification information.
   The above information may be information (ID) for identifying the AI/ML operation/task that the UE is participating in/using. For example, if a UE is participating in a FL operation, the AI/ML operation/task identification information may be information for identifying the FL operation. The AI/ML operation/task identification information may be assigned or designated by the AF.
III) Information about candidate UE(s) that will perform direct device connection/PC5 connection for the AI/ML operation (this may be particularly applicable when e) is recognized/determined in step 8) (e.g., UE#2)
   Information about the candidate UE(s) may include one or more of the following information. This information may be obtained by requesting the NEF (request via step 1). Alternatively, this information may be obtained from the UE.
   - Application Layer ID of each candidate UE
   - Layer-2 ID of each candidate UE
IV) Information about other UEs among the UEs that will perform decentralized AI/ML operations (this may be particularly relevant if f) is recognized (determined) in step 8).
   Information about the other UEs may include one or more of the following. This information may be obtained by requesting the NEF (requesting in step 1). Alternatively, this information may be obtained from the UE (e.g., UE#2).
   - Application Layer ID of each UE
   - Layer-2 ID of each UE
V) Information about the UE that will perform the server role when decentralized AI/ML operations are performed (this may be, for example, the application layer ID information of the corresponding UE).
   UE#2 may be the UE that will perform the server role.
VI) Information about the casting mode/type used for decentralized AI/ML operations. If not provided, the default mode/type may be unicast.
   If the cast mode/type information used for the above decentralized AI/ML operation is groupcast, an Application Layer Group ID and/or ProSe Layer-2 Group ID may be additionally provided to the terminal (UE#1).
VII) PC5 QoS parameters to apply when using direct device connection/PC5 for AI/ML operation.
VIII) Information indicating that the system is ready to use Direct Device Connection/PC5 for AI/ML operations, or that switching to Direct Device Connection/PC5 has been performed (completed).

The Application Layer ID may include AI/ML operation/task identification information.

The Application Layer Group ID may include AI/ML operation/task identification information.

The Application Layer ID and/or Application Layer Group ID may be assigned (designated) by the AF.

When decentralized AI/ML operations are performed, the UE to act as a server may be determined (selected) through negotiation between the UEs. This negotiation may be conducted via an application layer message. This negotiation may be conducted via a PC5-S message.

The AF may provide one or more of the information I) to VI) to UE#1 as well as UE#2.

If the AF recognizes (determines) e) in step 8, the AF may not provide the information III) to UE#2.

If the AF recognizes (determines) f) in step 8, the AF may provide UE#2 with information about UE#1 using information IV).

The AF may provide some or all of the PC5-related information to the UE using application layer messages (signaling).

Furthermore, the AF may provide some or all of the PC5-related information to the 5GC using an AF-based service parameter provisioning method (procedure). The PCF of the 5GC may then transmit the PC5-related information to the UE(s) to which it is to be provided.

The AF-based service parameter provisioning method (procedure) may be referenced in Sections 4.2.4 (AF-based service parameter provisioning) and 6.2.5 (AF-based service parameter provisioning for ProSe over control plane) of TS 23.304 v18.2.0.

When the AF detects (determines) that a UE participating in AI/ML operations: i) is switching from Uu to PC5, or ii) requires the execution of distributed AI/ML operations, or iii) determines that switching to PC5 has been performed (completed), it may maintain the list of member UEs participating in the AI/ML operation (e.g., list of member UE(s)) without making any changes.

The AF may store information about the UEs participating in the decentralized AI/ML operation.

When the AF determines which UE(s) will participate (use) in the AI/ML operation, the AF may provide one or more of the information in II) to VIII) to the UE(s).

When the AF determines which UE(s) will participate (use) in the AI/ML operation, the AF may provide the corresponding UE(s) with the information in I) at the time when direct device connection/switching (transition) to PC5 is required.

When the AF determines which UE(s) will participate in (use) an AI/ML operation, the AF may provide the UE(s) with one or more of the information in II) to VIII), and may also explicitly (or implicitly) instruct (request) the UE(s) to perform a direct device connection/switch to PC5 when the AF determines that the UE(s) are unable to use Uu or cannot satisfy QoS. This instruct (request) may be configured in the UE.

Alternatively, the UE may determine the switching operation at the implementation level.

If a UE is excluded from participating in (using) an AI/ML operation (task), the AF (or 5GC) may perform an operation (procedure) to revoke the PC5-related information provided to the UE.

Step 10. If unicast is used for decentralized AI/ML operations, the UE that received the PC5-related information may initiate a procedure to establish a PC5 unicast link with another UE. For example, a UE may send a direct communication request to another UE.

If the PC5-related information is provided to multiple UEs, a UE not acting as a server may initiate a procedure to establish a PC5 unicast link with a UE acting as a server.

Alternatively, if the PC5-related information is provided to multiple UEs, a UE acting as a server may initiate a procedure to establish a PC5 unicast link with a UE not acting as a server.

UE#1 may transmit a DCR (Direct Communication Request) message to establish a PC5 unicast link with UE#2 based on the PC5-related information.

The PC5 unicast link establishment procedure may be referenced in Section 6.4.3.1 (Layer-2 link establishment over PC5 reference point) of TS 23.304 v18.2.0. The DCR message may include one or more of the following information elements (or parameters, fields):
- Source User Info: Application Layer ID of UE#1
- Target User Info: Application Layer ID of UE#2. This may be included if provided or known to UE#1. Or, even if provided or known, it may not be included.
- ProSe Service Info: This may include (configure) AI/ML operation/task identification information. The AI/ML operation/task identification information may be information (ID) that identifies the AI/ML operation (task) that UE#1 is participating in (using). If the AI/ML operation/task identification information has been provided or known to UE#1, the ProSe Service Info may include the AI/ML operation/task identification information. Or, even if provided or known, it may not include it.

AI/ML operation/task identification information may be included (configured) by defining a new information element (or parameter, field) in the DCR message.

If the Layer-2 ID of UE#2 is provided to UE#1, the Layer-2 ID of UE#2 may be set as the Destination Layer-2 ID for transmitting the DCR message.

UE#1 may receive information about multiple UEs as candidate UE(s) for performing direct device connection/PC5 connection.

In this case, UE#1 may transmit a PC5 unicast link establishment request message to one of the multiple UEs. Alternatively, UE#1 may transmit a PC5 unicast link establishment request message to multiple UEs (some or all of the candidate UEs).

If UE#1 transmits a PC5 unicast link establishment request message to multiple UEs (some or all of the candidate UEs), UE#1 may receive response messages (e.g., a Direct Security Mode Command message, a Direct Communication Accept message, etc.) from the multiple UEs. In this case, UE#1 may decide to establish a PC5 unicast link with one or more of the UEs that transmitted the response messages. The above decision may be made based on PC5 sync signal (quality) information, etc., with the UE that transmitted the response message. This can be applied throughout this specification.

Furthermore, UE#1 may transmit a DCR message by setting (including) only AI/ML operation/task identification information, without setting (including) target user information. In this case, UE#1 may receive response messages (e.g., Direct Security Mode Command messages, Direct Communication Accept messages, etc.) from multiple UEs participating in the AI/ML operation/task. Then, UE#1 may decide to establish a PC5 unicast link with one or more of the UEs.

Step 11. UE#2 may respond to UE#1's PC5 unicast establishment request. Based on this, a PC5 unicast link may be established between UE#1 and UE#2.

UE#1 may notify AF that it is ready to use Direct Device Connection/PC5 (or that switching to Direct Device Connection/PC5 has been performed/completed).

UE#1 may perform AI/ML operations via Direct Device Connection/PC5.

For example, UE#1 may transmit training results to UE#2 via the established PC5 unicast link. UE#2 may then locally aggregate the training results and transmit an update of the training model for the next round to UE#1 via the PC5 unicast link. If UE#2 is able to use Uu, UE#2 may perform AI/ML operation-related interactions with the Application Server, such as transmitting training results to the Application Server.

If the UE determines that switching to Direct Device Connection (PC5) is necessary based on the QoS (or transmission conditions) of the UE, the UE may transmit a PC5 unicast link establishment request message to some or all of the other UEs participating in the AI/ML operation (this may be because the UE does not know which UEs are capable of PC5 communication). If the UE subsequently receives response messages (e.g., a Direct Security Mode Command message, a Direct Communication Accept message, etc.) from multiple UEs, the UE may decide to establish a PC5 unicast link with one or more of the multiple UEs.

If another UE is deemed capable of PC5 communication (e.g., the UE is aware of this in an implementation-specific manner), the UE may transmit a PC5 unicast link establishment request message to that UE.

The UE may also perform ProSe Direct Discovery based on PC5-related information to discover other UEs participating in the same AI/ML operation (task).

When decentralized AI/ML operations are performed in a groupcast manner, the UE may perform groupcast based on PC5-related information.

### II. Second Embodiment

The AF may perform member UE selection for AI/ML operations (application operations) without NEF assistance.

In this case, even when 'Annex I (informative): Member UE selection without the NEF assistance' of the AF of TS 23.502 v18.2.0 is used, the method described in the first embodiment may be applied.

The AF may interact with the UDM to obtain 1) and 3) of step 1 of the first embodiment.

The AF may interact with the AMF to obtain 2) of step 1 of the first embodiment.

The AF may need to perform additional operations, such as interacting with the UDR, to obtain 3) of step 1 of the first embodiment.

When interacting with the UDM, the AF may additionally request provision (notification) of 1) and 3) of step 1 of the first embodiment.

When interacting with the AMF, the AF may additionally request provision (notification) of 1) and 2) of step 1 of the first embodiment.

When interacting with the UDR, the AF may additionally request provision (notification) of 3) of step 1 of the first embodiment.

The AF may recognize (determine) a) to j) described in step 8 of the first embodiment.

Without the member UE selection assistance information provided by the NEF, the AF may recognize (determine) a) to j) described in step 8 of the first embodiment based on information obtained from the 5GC (or UE, etc.).

The AF described in step 8 of the first embodiment may obtain various information about the UE(s) included in the target UE list from the 5GC (5G Core) and the UE(s) or the UE(s) selected (determined) to participate in (use) AI/ML operations.

The above acquisition operation (procedure) may be performed before, in parallel with, or after step 5 (e.g., Member UE Selection) of 'Annex I (informative): Member UE selection without the NEF assistance at the AF' of TS 23.502 v18.2.0.

The steps 9 to 11 of the first embodiment may be applied.

If a UE participating in an AI/ML operation finds it difficult (impossible) to perform the AI/ML operation via a Uu connection, the UE may be enabled to perform the AI/ML operation via PC5. By providing the UE with information necessary for the PC5 operation, the AI/ML operation may be efficiently and smoothly continued via PC5.

The AF may select a UE to participate in the AI/ML operation. The AF may enable the selected UE to perform the AI/ML operation. In this regard, the following operations may be performed:
- The AF may request the NEF to provide/notify member UE selection assistance information. Or, the AF may subscribe to the provision/notification service.
- The AF may select/determine member UEs to participate in (use) AI/ML operations based on member UE selection assistance information provided (notified) by the NEF.
- The AF may provide PC5-related information to the selected (determined) member UEs.

The PC5-related information may be some or all of I) to VIII) described in step 9 of the first embodiment.

The PC5-related information may also be provided to the UEs when the AF instructs the UEs to perform an AI/ML operation (e.g., FL).
- If the UE determines that it is difficult or impossible to perform the AI/ML operation using Uu, or if Uu becomes unavailable, it may decide to perform the AI/ML operation using PC5.
- The UE may perform the AI/ML operation via PC5 with other UEs participating in the AI/ML operation.

The PC5-related information may be used to perform the AI/ML operation via PC5. For example, the PC5 related information may be used when establishing a PC5 unicast link with another UE.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

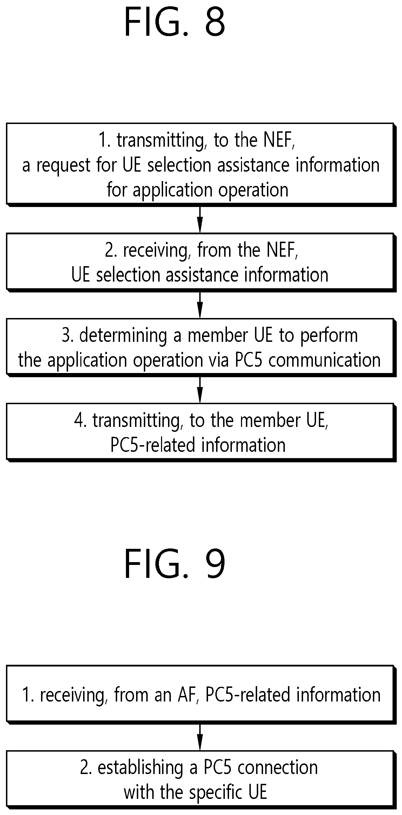

**FIG. 8** **shows the procedure of the AF according to disclosure of the present specification.**
1. The AF may transmit, to the Network Exposure Function (NEF), a request for UE (User Equipment) selection assistance information for application operation.
2. The AF may receive, from the NEF, UE selection assistance information based on the request.

The UE selection assistance information may include a candidate UE list.

A UE included in the candidate UE list may be able to perform the application operation via PC5 communication.

QoS (Quality of Service) for Uu communication of a UE included in the candidate UE list may not meet a specific criterion,

3. The AF may determine a member UE to perform the application operation via PC5 communication, based on the UE selection assistance information.

4. The AF may transmit, to the member UE, PC5-related information.

The PC5-related information may include information instructing the member UE to establish a PC5 connection with a specific UE to perform the application operation.

A UE included in the candidate UE list may be performing the application operation via Uu communication.

The AF may determine an other member UE to perform the application operation via PC5 communication, based on the UE selection assistance information.

The AF may transmit, to the other member UE, the PC5-related information.

The PC5-related information may include information that the specific UE acts as a server for the application operation.

The PC5-related information may include information instructing the other member UE to perform the application operation by establishing a PC5 connection with the specific UE.

The request may include filtering criteria.

A UE included in the candidate UE list may meet the filtering criteria.

The AF may receive, from the NEF, a list from which a first UE has been deleted from the candidate UE list, based on that the first UE included in the candidate UE list no longer meets the filtering criteria after receiving the UE selection assistance information.
wherein the step of determining the member UE is performed, based on the list from which the first UE has been deleted.

The request may include a target UE list.

The UE selection assistance information may include information of a UE included in the target UE list.

The target UE list may include a UE included in the candidate UE list.

The PC5-related information may include information about cast type for the PC5 connection.

The application operation may be Artificial Intelligence (AI) operation or Machine Learning (ML) operation.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

**FIG. 9** **shows the procedure of the UE according to disclosure of the present specification.**
1. The UE may receive, from an AF, PC5-related information.

The UE may be able to perform application operation via PC5 communication.

QoS for Uu communication of the UE may not meet a specific criterion.

The PC5-related information may include information instructing the UE to perform the application operation by establishing a PC5 connection with a specific UE.

2. The UE may establish a PC5 connection with the specific UE, based on the PC5-related information.

The UE may be performing the application operation via Uu communication.

The PC5-related information may include information about cast type for the PC5 connection.

The application operation may be AI operation or ML operation.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

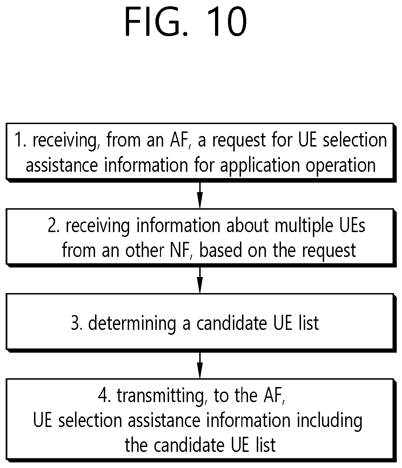

**FIG. 10** **shows the procedure of the NEF according to disclosure of the present specification.**
1. The NEF may receive, from an AF, a request for UE selection assistance information for application operation.
2. The NEF may receive information about multiple UEs from an other Network Function (NF), based on the request.
3. The NEF may determine a candidate UE list, based on the information about the multiple UEs.

A UE included in the candidate UE list may be able to perform the application operation via PC5 communication.

QoS for Uu communication of a UE included in the candidate UE list may not meet a specific criterion.

4. The NEF may transmit, to the AF, UE selection assistance information including the candidate UE list.

A UE included in the candidate UE list may be performing the application operation via Uu communication.

The request may include filtering criteria.

The information about the multiple UEs may include information about whether the multiple UEs meet the filtering criteria.

A UE included in the candidate UE list may meet the filtering criteria.

The NEF may receive, from the other NF, notification information after receiving the information about the multiple UEs.

The notification information may include information indicating that a first UE included in the candidate UE list has failed to meet the filtering criteria.

The NEF may transmit, to the AF, a list from which a first UE has been deleted from the candidate UE list, based on the notification information.

The request may include a target UE list.

The target UE list may include the multiple UEs.

The target UE list may include a UE included in the candidate UE list.

The UE selection assistance information may include information of the multiple UEs.

The application operation may be AI operation or ML operation.

Hereinafter, an apparatus for performing communication according to some embodiments of the present specification will be described.

For example, a apparatus may include a processor, a transceiver, and a memory.

For example, a processor may be configured to be operably coupled with a memory and a processor.

The processor may perform: transmitting, to the Network Exposure Function (NEF), a request for UE (User Equipment) selection assistance information for application operation; receiving, from the NEF, UE selection assistance information based on the request; wherein the UE selection assistance information includes a candidate UE list, wherein a UE included in the candidate UE list is able to perform the application operation via PC5 communication, wherein QoS (Quality of Service) for Uu communication of a UE included in the candidate UE list does not meet a specific criterion, determining a member UE to perform the application operation via PC5 communication, based on the UE selection assistance information; and transmitting, to the member UE, PC5-related information, wherein the PC5-related information includes information instructing the member UE to establish a PC5 connection with a specific UE to perform the application operation.

Hereinafter, a processor for providing communication according to some embodiments of the present specification will be described.

The processor is configured to: transmitting, to the Network Exposure Function (NEF), a request for UE (User Equipment) selection assistance information for application operation; receiving, from the NEF, UE selection assistance information based on the request; wherein the UE selection assistance information includes a candidate UE list, wherein a UE included in the candidate UE list is able to perform the application operation via PC5 communication, wherein QoS (Quality of Service) for Uu communication of a UE included in the candidate UE list does not meet a specific criterion, determining a member UE to perform the application operation via PC5 communication, based on the UE selection assistance information; and transmitting, to the member UE, PC5-related information, wherein the PC5-related information includes information instructing the member UE to establish a PC5 connection with a specific UE to perform the application operation.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: transmitting, to the Network Exposure Function (NEF), a request for UE (User Equipment) selection assistance information for application operation; receiving, from the NEF, UE selection assistance information based on the request; wherein the UE selection assistance information includes a candidate UE list, wherein a UE included in the candidate UE list is able to perform the application operation via PC5 communication, wherein QoS (Quality of Service) for Uu communication of a UE included in the candidate UE list does not meet a specific criterion, determining a member UE to perform the application operation via PC5 communication, based on the UE selection assistance information; and transmitting, to the member UE, PC5-related information, wherein the PC5-related information includes information instructing the member UE to establish a PC5 connection with a specific UE to perform the application operation.

The present specification may have various effects.

For example, through the procedures disclosed herein, AF can select a terminal and instruct it to perform an application operation via PC5.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by an Application Function (AF), comprising:
transmitting, to the Network Exposure Function (NEF), a request for UE (User Equipment) selection assistance information for application operation;
receiving, from the NEF, UE selection assistance information based on the request;
wherein the UE selection assistance information includes a candidate UE list,
wherein a UE included in the candidate UE list is able to perform the application operation via PC5 communication,
wherein QoS (Quality of Service) for Uu communication of a UE included in the candidate UE list does not meet a specific criterion,
determining a member UE to perform the application operation via PC5 communication, based on the UE selection assistance information; and
transmitting, to the member UE, PC5-related information,
wherein the PC5-related information includes information instructing the member UE to establish a PC5 connection with a specific UE to perform the application operation.

2. The method of claim 1,
wherein a UE included in the candidate UE list is performing the application operation via Uu communication.

3. The method of claim 1 or claim 2, further comprising:
determining an other member UE to perform the application operation via PC5 communication, based on the UE selection assistance information; and
transmitting, to the other member UE, the PC5-related information,
wherein the PC5-related information includes information that the specific UE acts as a server for the application operation,
wherein the PC5-related information includes information instructing the other member UE to perform the application operation by establishing a PC5 connection with the specific UE.

4. The method of one of the claims 1 to 3,
wherein the request includes filtering criteria,
wherein a UE included in the candidate UE list meets the filtering criteria.

5. The method of claim 4, further comprising:
receiving, from the NEF, a list from which a first UE has been deleted from the candidate UE list, based on that the first UE included in the candidate UE list no longer meets the filtering criteria after receiving the UE selection assistance information,
wherein the step of determining the member UE is performed, based on the list from which the first UE has been deleted.

6. The method of claim 4,
wherein the request includes a target UE list,
wherein the UE selection assistance information includes information of a UE included in the target UE list,
wherein the target UE list includes a UE included in the candidate UE list.

7. The method of one of the claims 1 to 6,
wherein the PC5-related information includes information about cast type for the PC5 connection.

8. The method of one of the claims 1 to 7,
wherein the application operation is Artificial Intelligence (AI) operation or Machine Learning (ML) operation.

9. A method for performing communication, performed by a UE, comprising:
receiving, from an AF, PC5-related information; and
wherein the UE is able to perform application operation via PC5 communication,
wherein QoS for Uu communication of the UE does not meet a specific criterion,
wherein the PC5-related information includes information instructing the UE to perform the application operation by establishing a PC5 connection with a specific UE,
establishing a PC5 connection with the specific UE, based on the PC5-related information.

10. The method of claim 9,
wherein the UE is performing the application operation via Uu communication.

11. The method of claim 9,
wherein the PC5-related information includes information about cast type for the PC5 connection.

12. The method of one of the claims 9 to 11,
wherein the application operation is AI operation or ML operation.

13. A method for performing communication, performed by a NEF, comprising:
receiving, from an AF, a request for UE selection assistance information for application operation;
receiving information about multiple UEs from an other Network Function (NF), based on the request;
determining a candidate UE list, based on the information about the multiple UEs; and
wherein a UE included in the candidate UE list is able to perform the application operation via PC5 communication, wherein QoS for Uu communication of a UE included in the candidate UE list does not meet a specific criterion, transmitting, to the AF, UE selection assistance information including the candidate UE list.

14. The method of claim 13,
wherein a UE included in the candidate UE list is performing the application operation via Uu communication.

15. The method of claim 13,
wherein the request includes filtering criteria,
wherein the information about the multiple UEs includes information about whether the multiple UEs meet the filtering criteria,
wherein a UE included in the candidate UE list meets the filtering criteria.

16. The method of claim 15, further comprising:
receiving, from the other NF, notification information after receiving the information about the multiple UEs; and
wherein the notification information includes information indicating that a first UE included in the candidate UE list has failed to meet the filtering criteria;
transmitting, to the AF, a list from which a first UE has been deleted from the candidate UE list, based on the notification information.

17. The method of claim 15,
wherein the request includes a target UE list,
wherein the target UE list includes the multiple UEs,
wherein the target UE list includes a UE included in the candidate UE list,
wherein the UE selection assistance information includes information of the multiple UEs.

18. The method of one of the claims 13 to 17,
wherein the application operation is AI operation or ML operation.

19. An AF, to perform communication, comprising:
a transceiver; and
a processor,
wherein the processor performs operation that is a method of one of the claims 1 to 8.

20. A UE, to perform communication, comprising:
a transceiver; and
a processor,
wherein the processor performs operation that is a method of one of the claims 9 to 12.

21. A NEF, to perform communication, comprising:
a transceiver; and
a processor,
wherein the processor performs operation that is a method of one of the claims 13 to 18.
